# EUROPÄISCHE PATENTSCHRIFT

(11) **EP 0 700 883 B1**
(45) Veröffentlichungstag und Bekanntmachung des Hinweises auf die Patenterteilung: **10.04.1996**
(21) Anmeldenummer: 94114142.6
(22) Anmeldetag: 07.09.1994
(51) Int. Cl.: C05F 11/00, E04D 11/00

(54) **Schüttfähiges Vegetationserdsubstrat, Verfahren zum herstellen desselben und seine Verwendung**
Triable vegetation supporting soil substrate, process for its production and its use
Substrat de sol manipulable pour végétation, son procédé de fabrication et son utilisation

(43) Veröffentlichungstag der Anmeldung: 13.03.1996
(73) Patentinhaber: AKTUAL BAUTEILE UND UMWELTSCHUTZSYSTEME GmbH & Co. KG, D-25436 Tornesch (DE)
(72) Erfinder: Seigert, Paul Dipl.-Ing., D-25421 Pinneberg (DE)
(74) Vertreter: Fleck, Thomas, Dr. Dipl.-Chem.

(56) Entgegenhaltungen:
- EP-A- 0 045 376
- DE-A- 2 321 362
- DE-A- 2 459 269
- FR-A- 2 442 809
- GB-A- 2 252 553
- GB-A- 2 274 997
- DBZ DEUTSCHE BAUZEITSCHRIFT, Bd.39, Nr.4, April 1991, GUTERSLOH,DE Seiten 561 - 564 H-J. KROLKIEWICZ 'Dachbegrünungen'
- DBZ DEUTSCHE BAUZEITSCHRIFT, Bd.40, Nr.11, November 1992, GUTERSLOH, DE Seiten 1695 - 1702 R. APPL 'Begrünte Dächer'

## Beschreibung

Die Erfindung betrifft ein faserbewehrtes schüttfähiges Vegetationserdsubstrat nach dem Oberbegriff des Anspruches 1. Ein derartiges Vegetationserdsubstrat ist aus der GB-A-2 274 997 bekannt. Es wird insbesondere für Sportplätze mit Grasflächen eingesetzt, die durch die Sportler stark beansprucht werden. Die organischen Substratbestandteile werden ausschließlich durch Torf und sog. "top-soil" gebildet. Zur Stabilisierung des Wurzelwerkes werden synthetische Einzelkunststoffasern in Mengen von 0,9 - 0,4 Gew.% vorgeschlagen.
Die FR-A-2 442 809 betrifft ein Fasersubstrat zur Verbesserung des Pflanzenwachstums, das aus natürlichen und synthetischen Substanzen, auch als Gemisch, bestehen kann, die sowohl aus neuem als auch recyclisierten Material mit 1 - 2 cm Faserlänge, wie Pappe, Karton und Textilien, hergestellt sein können.

Schüttfähige Vegetationserdsubstrate gibt es in verschiedenen Arten, die an die jeweils gewünschte Begrünung angepaßt sind. Sie bilden in gewissen Schichtdicken von 0,5 bis 30 cm einen künstlichen Bodenaufbau, nämlich die Vegetationstragschicht, zur Aufnahme der eigentlichen Vegetation und ggf. des Niederschlags- und Bewässerungswassers.

Vegetationserdsubstrate sind ferner aus der DE-B-24 59 269 und der DE-C-832 897 bekannt.

Im übrigen sind Vegetationsmatten im Stand der Technik, beispielsweise aus unserer EP-B-0 608 450 bekannt, die insbesondere auch einen guten Überblick über weitere Vorveröffentlichungen und die Literatur bietet, worauf ausdrücklich verwiesen wird.

Bei langanhaltender Trockenheit wird das Bodenwasser sowohl durch die Pflanzen über die Wurzeln zu Ihrem Wachstum aber auch durch Verdunstung, auch über die Blätter, verbraucht.

Abhängig von der Schichtdicke eines solchen künstlichen Bodenaufbaues zeigen sich innerhalb weniger Tage oder mehrerer Wochen Kerb- bzw. Trockenrisse an der Oberfläche. Diese sind teilweise nur einige Millimeter, manchmal aber auch, abhängig von der Bodenqualität und der Mächtigkeit, mehrere Zentimeter breit.

Im normalen Acker- und Gartenbau sind solche Erscheinungen zwar nicht pflanzen- und kulturförderlich, aber sie werden bei entsprechend anfallendem Regen oder durch künstliche Beregnung und die, in der in Verbindung mit der Wasseraufnahme entstehende Quellung, wieder geschlossen. Darüberhinaus werden solche Risse in diesen Fällen durch nachfolgende Kultur- oder Pflegemaßnahmen (hacken) zerstört bzw. gegenstandslos gemacht.

Ganz anders sind ihre gravierenden Auswirkungen auf Vegetationsflächen, die keine Verbindung mehr zum gewachsenen Boden haben; ganz besonders gravierend, wenn es sich bei solchen Flächen auch noch um geneigte Dachflächen handelt, denn
- in Folge der meist niedrigen Schichthöhen entstehen Trockenrisse in viel geringeren Abständen als im gewachsenen Boden.
- Aufgrund der geringen Schichtdicke gelangen Wind, Sonne und Trockenheit mit ihrer austrocknenden, auszehrenden Wirkung rasch an die feinen Faserwurzelsysteme.
- Insbesondere bei extensiv begrünten Dachflächen handelt es sich immer um Vegetationen mit relativ niedriger und sehr locker, sogar lückig wachsender Vegetation. Dadurch bedingt, haben die Atmosphärilien (Sonne, Wind, Regen, Schnee, Eis) fast ungehindert direkten Zugang zu solchen Rissen im Substrat, vor allem in der Substratoberfläche.
- Durch Wind entstehen bei Dachbegrünungen, ausgehend von solchen Substratrissen, insbesondere an den Schnittkanten, wie unmittelbar hinter der Attika bei Flachdächern, an Ecken, aber ganz besonders im First und an den Ortgängen, tiefgreifende Winderosionen. Diese wirken sich z.B. auch auf die mit nur schwachem Wurzelwerk versehene Extensiv-Vegetation aus.
- Solche Substrate und Böden sind in der Regel hydrophob, d.h. wenn sie ausgetrocknet sind, nehmen sie nur sehr langsam Wasser auf. Diese eingeschränkte Wasseraufnahme bis zur vollständigen Quellung, daß solche Risse also wieder durch das Quellen geschlossen sind, dauert erheblich länger als das Regenwasser zu fließen beginnt. Dadurch entstehen sehr schwerwiegende Wassererosionen. Häufig werden durch diese Ursache quadratmeterweise Dachbegrünungen erodiert. Wurde in solchen Fällen ein nicht fachgerecht stabilisiertes Substrat verwendet, sind in der Praxis schon ganze Dachflächen erodiert worden bzw. abgerutscht.

Über diese boden- bzw. substratphysikalischen Gegebenheiten hinaus, besteht insbesondere bei der Dachbegrünung oder bei Begrünung von Flächen ohne Erdverbindung ein Problem darin, solche Substrate mit geeigneter organischer Substanz zu versorgen.

Die normalerweise im Boden vorhandene organische Substanz entwickelt sich im Laufe der Jahre bzw. Jahrzehnte durch Wachsen von Wurzeln und Blättern, deren Vergehen und dem allmählichen, über Jahre sich hinziehenden, Umsetzen zu Humus und Nährhumus. Schließlich werden diese Substanzen mineralisiert und stehen dann den Pflanzenwurzeln als aufnahmefähige Nährstoffe zur Verfügung.

Bei Substraten für Flächen ohne Erdverbindung kommt es darauf an, mit organischer Substanz zu arbeiten, die sich im Gegensatz zur Pflanzen- oder Wurzelmasse nur sehr langsam umsetzt. Auf diese Weise wird das erforderliche Makroporenvolumen erhalten, damit die Pflanzenwurzeln in solchen Begrünungen über das entsprechende Luftporenvolumen mit Sauerstoff versorgt werden können. Im Gegensatz zur Landwirtschaft oder zum Gartenbau kann in solchen Flächen nicht jährlich ein- oder mehrmals gepflügt oder gegraben bzw. zur Bodendurchlüftung gehackt werden.

Zu schnelles Umsetzen der organischen Substanz erhöht in starkem Maße die Feinanteile in solchen Substraten, was zu einem raschen Verlust an erforderlichem Porenraum infolge von Verdichten bzw. Verschlämmen der Poren und der Schichten führt, wodurch die Wurzelatmung eingeschränkt und allmählich unterbunden wird.

Der Erfindung liegt deshalb die Aufgabe zugrunde, das eingangs genannte, faserbewehrte schüttfähige Vegetationstragschichtsubstrat derart zu verbessern, daß es die geschilderten Nachteile sicher vermeidet, d.h. Trockenheitsrisse, sowie Wind- und/oder Wassererosionen nicht auftreten läßt. Auch sollte das Abbinden oder Verschlämmen der Substratoberfläche infolge Niederschlags oder Bewässerung verhindert werden. Darüberhinaus ist es natürlich sinnvoll, ökologiebewußte Stoffkreisläufe zu fördern.

Diese Aufgabe wird erfindungsgemäß durch das im Anspruch 1 gekennzeichnete Vegetationserdsubstrat bzw. durch das im Anspruch 7 gekennzeichnete Verfahren oder auch durch seine Verwendung gemäß Anspruch 8 gelöst.

Bei den Mischungen sind die nicht verrottbaren Bewehrungs-Faserbestandteile und eingeschränkt auch die schwer verrottbaren organischen Faseranteile immer die trockenrißverhindernde Stoffkomponente in ihrer Wirkung als vernetzende "Faserbewehrung", ähnlich wie Baustahlgewebematten im Beton oder Gewebeverstärkungen z.B. in Dachabdichtungsbahnen.

Die schwer verrottbaren Faserkomponenten haben zunächst, nämlich bis sie nach mehreren Monaten verrottet sind, zusätzlich zu der synthetischen Faserbewehrung die gleiche Funktion, bis der Wurzelfilz der Vegetation einerseits diese Funktion teilweise mit übernimmt und andererseits die etablierte Vegetation durch die Schattierwirkung dem Austrocknen und den anderen Erosionsgefahren des Substrates entgegenwirkt.

Die nur langsam abbaubaren organischen Fasern bilden darüberhinaus eine sehr langsam fließende Humusquelle, die die Wasserspeicherung sowie die Adsorptionskapazität, die Struktur und das Porenvolumen von Dachbegrünungssubstraten in idealer Weise optimiert.

Abhängig von der Bau- oder Anwendungsweise solcher Substrate bei Dachbegrünungen sind unterschiedliche Fasermischungen und -anteile erforderlich. Dabei kommt es darauf an, ob es sich um flache oder geneigte Dächer handelt, und ob allein nur die horizontale Rißbildung oder, durch horizontal-vertikales Vernetzen der Faserbewehrung, auch in der obersten Substratschicht sowie auf der Substratoberfläche Wasser- und Winderosion bzw. schädliches Verschlämmen zu verhindern sind. Dies wird besonders vorteilhaft durch die kürzeren und dickeren Bewehrungsfaser-Anteile bewirkt, die sich infolge ihrer Beschaffenheit mehr senkrecht stellen und somit palisadenartig die längeren Bewehrungsfasern vernetzen, sowie in der Substratschicht befindlich und über die Substratoberfläche hinausragend, der Wasser- und Winderosion sowie dem Verschlämmen entgegenwirken.

Die unterschiedlichen Aufgabenstellungen erfordern differenzierte Mischungen. Einige davon werden nachstehend beispielhaft aufgeführt. Dabei werden die organischen, nur langsam abbaubaren Fasern, die je nach Verfügbarkeit unterschiedlich sein können, in einer Volumenanteilmenge zwischen 0,5 und 25 Vol.% beigemischt. Die nicht verrottbaren, stark zu differenzierenden Bewehrungs-Faseranteile sind in Tabelle 1 aufgeführt. Die in Tabelle 1 aufgeführten %-Zahlen sind Vol.% bezogen auf die bei der Produktion aus den Bewehrungsfasergruppen A, B und C herzustellende Substratmenge. Tabelle 2 zeigt die jeweilige Gesamtmenge der synthetischen Bewehrungsfasern der einzelnen Beispielmischungen, auf die die Erfindung jedoch keinesfalls beschränkt ist. Andere Rezepturen hinsichtlich der Mischungen, ihrer Gewichtsanteile und dtex-Werte sind für den Fachmann denkbar. Auch ist es möglich, nur synthetische Fasern gleicher Länge/dtex einzusetzen.

Aufgrund ihrer chemischen und physikalischen Beschaffenheit unterliegen sowohl die organischen als auch die synthetischen Fasern beim Herstellungsprozeß der Substrate einem sogenannten Mischvolumenverlust. Wenn also die Bewehrungs-Fasern bzw. organischen Komponenten mit den weiteren Zuschlagstoffen, wie mineralische Stabilisatoren aus gebrochenem Blähton, -schiefer sowie Gesteinssplitten, Ton und anderen schweren Stoffen vermischt werden, werden sie zusammengedrückt oder gelangen in die Hohlräume zwischen die für die erforderliche Verzahnung rauhen Bruchkanten der Stabilisator-Körnungen.

Weiterhin weiß man aus der täglichen Praxis, daß ein entsprechendes Substrat, z.B. mit 30 Vol.% Torf hergestellt, je nach Beschaffenheit der anderen Zuschlagstoffe in der Analyse des fertigen Substrates vielleicht nur noch 4 - 8 Gew.% organische Substanz aufweist. Ähnlich verhalten sich auch die synthetischen Bewehrungsfasern.

Die "Sonstigen Substratanteile" in Tabelle 3 bestehen aus je nach Aufgabenstellung oder Anforderungsprofil für die einzelnen Substrate unterschiedlichen Anteilen aus Ton und Schluff (abschlämmbare Körnungen), Fein-, Mittel- und Grobsand, sowie mineralischen Stabilisatoren in normal anfallenden oder gebrochenen Körnungen von Blähton, Blähschiefer, Lava, Bims, Ziegel- oder Betonbruchsplitt, Kalksteinsplitt und Schlacken im Kieskornbereich. Weiterhin werden Nährstoffe, bewurzelungsfördernde Gele in Form von Alginaten sowie pH-Wert erhöhende und/oder senkende Stoffe beigegeben.

**TABELLE 1**

| Fasergruppe A | dtex ≦ 100 1 = ca. 1 cm | dtex ≦ 100 1 = ca. 2,5 cm | dtex ≦ 100 1 = ca. 5 cm | dtex ≦ 100 1 = ca. 7,5 cm | dtex ≦ 100 1 = ca. 10 cm |
|---|---|---|---|---|---|
| 2 | 0,5 | -- | 0,5 | 0,5 | -- |
| 3 | 1 | 0,5 | -- | 0,5 | 0,5 |
| 4 | 1 | 1 | 1,5 | 1 | 1 |
| 5 | 1,5 | 1,5 | 2,0 | 2 | 2 |
| 6 | 1,5 | 2 | 2,5 | 2 | 2 |

| Fasergruppe B | dtex ≦ 200 1 = ca. 1 cm | dtex ≦ 200 1 = ca. 2,5 cm | dtex ≦ 200 1 = ca. 5 cm | dtex ≦ 200 1 = ca. 7,5 cm | dtex ≦ 200 1 = ca. 10 cm |
|---|---|---|---|---|---|
| 2 | 0,25 | 0,25 | -- | -- | -- |
| 3 | 0,5 | 1 | 2 | 1 | 0,5 |
| 4 | 1 | 1,5 | 2,5 | 1,5 | 1 |
| 5 | 1,5 | 1,5 | 2,5 | 2 | 1,5 |
| 6 | 1,5 | 2 | 2,5 | 2,5 | 2 |

| Fasergruppe C | dtex ≦ 300 1 = ca. 1 cm | dtex ≦ 300 1 = ca. 2,5 cm | dtex ≦ 300 1 = ca. 5 cm | dtex ≦ 300 1 = ca. 7,5 cm | dtex ≦ 300 1 = ca. 10 cm |
|---|---|---|---|---|---|
| 2 | | 0,5 | 0,5 | | 0,5 |
| 3 | 1 | 0,5 | 1 | 0,5 | 1 |
| 4 | 1 | 1 | 2 | 1,5 | 1 |
| 5 | 1,5 | 1,5 | 2,0 | 1,5 | 1 |
| 6 | 1,5 | 2 | 2 | 2 | 2 |
| %-Angaben = Vol. % | | | | | |

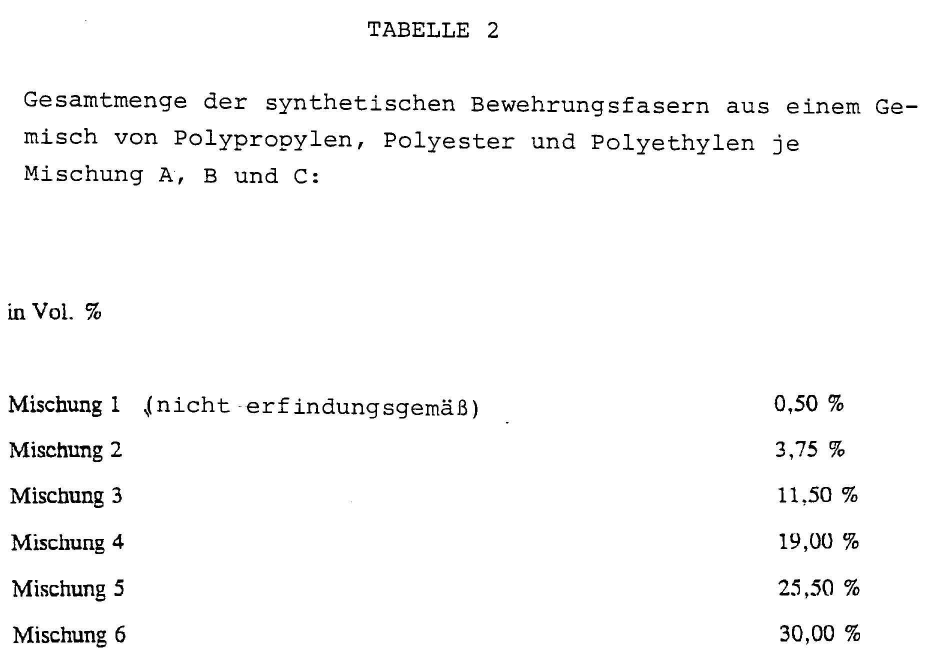

**TABELLE 3**

| Beispielmischungen mit Vol.%-Anteilen der Substratgemische gem. Tabelle 2 | | | | |
|---|---|---|---|---|
| **Mischung 1** (nicht erfindungsgemäß) | **Nicht verrottbare** Bewehrungsfasern | **Schwer abbaubare** organische Anteile | **Leicht abbaubare** organische Anteile | **Sonstige** Substratanteile |
| optima-Intensiv-Substrat leicht I (früher optima-Intensiv-Substrat Typ I/01) | 0,5 | 25 | 10 | 64,5 |

| **Mischung 2** | | | | |
|---|---|---|---|---|
| optima-Intensiv-Substrat leicht II (bisher optima-Intensiv-Substrat HS [hochstabilisiert]) | 3,75 | 15 | 10 | 71,25 |

| **Mischung 3** | | | | |
|---|---|---|---|---|
| optima-Intensiv-Substrat schwer (bisher optima-Intensiv-Substrat Typ V 50) | 11,5 | 5 | 15 | 68,5 |

| **Mischung 4** | | | | |
|---|---|---|---|---|
| optima-Extensiv-Substrat leicht (bisher optima-Extensiv-Substrat Typ E/30) | 19,00 | 10, | 10 | 61 |

| **Mischung 5** | | | | |
|---|---|---|---|---|
| optima-Extensiv-Substrat schwer (bisher optima-Extensiv-Substrat Typ E/40) | 25,5 | 5 | 15 | 54,5 |

| **Mischung 6** | | | | |
|---|---|---|---|---|
| optima-Einschicht-Substrat schwer (bisher optima-Extensiv-Einschicht-Mineralsubstrat Typ M) | 30,00 | 0,5 | 5 | 64,5 |

## Patentansprüche

1. Faserbewehrtes, schüttfähiges Vegetationserdsubstrat als Trägergrundlage mit einer Dicke von 0,5 - 30 cm für Vegetationsflächen zur Begrünung, mit anorganischen und organischen Substratbestandteilen, umfassend nicht verrottbare, lose Einzelkunststoffasern in Längen von 1 - 10 cm, gekennzeichnet durch 3,75 - 30 Vol.% aufgedröselte und /oder aufgekrempelte Kunststoffasern,auch aus Recyclingmaterial, und wobei die organischen Bestandteile langsam abbaubar und schwer verrottbar sind und zu 0,5 - 25 Vol.% eingesetzt werden, um Dächer ohne Erdverbindung zu begrünen.

2. Schüttfähiges Vegetationserdsubstrat nach Anspruch 1, dadurch gekennzeichnet, daß als Kunststoffasern ein oder mehrere der folgenden Kunststoffe eingesetzt werden: Polyamid, Polyester, Polyolefin, Polyethylen, Polypropylen.

3. Schüttfähiges Vegetationserdsubstrat nach Anspruch 1 und 2, gekennzeichnet durch 0,5 - 25 Vol.% langsam abbauende, schwer verrottbare, organische Bestandteile wie Kokos-, Sisal- oder Jutefasern sowie Rhizinusschrot, Reisspältzen und Kakaoschalen.

4. Schüttfähiges Vegetationserdsubstrat nach Anspruch 1 bis 3, gekennzeichnet durch folgendes Mischungsverhältnis der Faseranteile: 1 - 50 % synthetische, nicht verrottbare Fasern und 50 - 99 % langsam abbauende, verrottbare Fasern.

5. Schüttfähiges Vegetationserdsubstrat nach Anspruch 1 bis 4, gekennzeichnet durch Synthesefaser mit 5 - 300 dtex.

6. Schüttfähiges Vegetationserdsubstrat nach Anspruch 1 bis 5, dadurch gekennzeichnet, daß leicht abbaubare organische Anteile 5 - 15 Vol.% betragen.

7. Verfahren zum Herstellen des schüttfähigen Vegetationserdsubstrates nach einem oder mehreren der vorstehenden Ansprüche 1 bis 6, dadurch gekennzeichnet, daß man aus Kunststoffasern bestehende Bindfäden bzw. gedrehte Seile oder entsprechende Fasergelege, bei denen es sich sowohl um neues aber natürlich auch zu recycelndes Material handeln kann, in Stücke von 1- 10 cm aufschneidet, die Seilstücke anschließend in Einzelfasern aufdröselt und/oder aufkrempelt und danach zusammen mit den langsam abbaubaren, schwer verrottbaren organischen Bestandteilen dem Vegetationserdsubstrat unter Erzeugung eines möglichst homogenen Gemisches zumischt.

8. Verwendung eines schüttfähigen Vegetationserdsubstrates nach Ansprüchen 1- 6 zusammen mit einer horizontal und vertikal vernetzten Faserbewehrung, umfassend Mischungen von 3,75 - 30 Vol.% nicht verrottbarer, loser, als Einzelfasern aus Neu- oder Recyclingmaterial aufgedröselten und/oder aufgekrempelten Kunststoffasern in Längen von 1 - 10 cm, und 0,5 - 25 Vo.% von langsam abbaubaren, schwer verrottbaren, organischen Bestandteilen als Trägergrundlage zur Anzucht von insbesondere Vegetationsflächen oder -matten und als Vegetationstragschicht für Dachbegrünungen.

## Claims

1. Fibre-reinforced, pourable vegetation soil substrate as a support base with a thickness of 0.5 to 30 cm for vegetation surfaces for greening, having organic and inorganic substrate constituents, comprising undecayable, loose individual plastic fibres in lengths of 1 to 10 cm, characterized by 3.75 to 30 vol. % of untwisted and/or carded plastic fibres, also from recycled material and in which the organic constituents are slowly decomposable and difficultly decayable and used in a proportion of 0.5 to 25 vol.%, in order to green roofs without any soil connection.

2. Pourable vegetation soil substrate according to claim 1, characterized in that the plastic fibres are constituted by one or more of the following plastics materials: polyamide, polyester, polyolefin, polyethylene and polypropylene.

3. Pourable vegetation soil substrate according to claim 1 and 2, characterized by 0.5 to 25 vol.% of slowly decomposing, difficultly decayable, organic constituents such as coconut, sisal or jute fibres, as well as ricinus and rice pieces and cacao shells.

4. Pourable vegetation soil substrate according to claims 1 to 3, characterized by the following mixing ratio of the fibrous portions: 1 to 50% synthetic, undecayable fibres and 50 to 99% of slowly decomposable, decayable fibres.

5. Pourable vegetation soil substrate according to claims 1 to 4, characterized by synthetic fibres with 5 to 300 dtex.

6. Pourable vegetation soil substrate according to claims 1 to 5, characterized in that the easily decomposable organic portions represent 5 to 15 vol.%.

7. Process for the production of pourable vegetation soil substrate according to one or more of the preceding claims 1 to 6, characterized in that string or twisted ropes or corresponding fibre woven fabrics made from plastic fibres, which can be in the form of both new and also recyclable material, are cut into 1 to 10 cm pieces, the rope pieces are then untwisted and/or carded to individual filaments and then, together with the slowly decomposable, difficultly decayable organic constituents, are admixed with the vegetation soil substrate, accompanied by the production of a very homogeneous mixture.

8. Use of a pourable vegetation soil substrate according to claims 1 to 6 together with a horizontally and vertically interlaced fibre reinforcement comprising mixtures of 3,75 to 30 vol.% undecayable, loose plastic fibres untwisted and/or carded as individual filaments from new or recycled material in lengths of 1 to 10 cm and 0.5 to 25 vol.% of slowly decomposable, difficultly decayable, organic constituents as a support base for the growing of in particular vegetation surfaces or mats or as a vegetation support layer for roof greening.

## Revendications

1. Substrat pour végétation, renforcé par libres, apte à être mis en tas, comme base porteuse d'une épaisseur de 0,5 à 30 cm pour des surfaces de végétation pour plantation, avec des constituants de substrat organiques et anorganiques, comprenant des fibres synthétiques individuelles imputrescibles détachées, d'1 à 10 cm de longueur, caractérisé par 3,75 à 30 % en volume de fibres synthétiques détortillées et/ou ouvertes, aussi en matière de recyclage, et les constituants organiques étant dégradables lentement et difficilement putrescibles et étant utilisés à raison de 0,5 à 25 % en volume pour pouvoir effectuer des plantations sur les toits sans jonction à la terre.

2. Substrat pour végétation apte à être mis en tas selon la revendication 1, caractérisé en ce qu'une ou plusieurs des matières synthétiques suivantes sont utilisées comme fibres synthétiques : polyamide, polyester, polyoléfine, polyéthylène, polypropylène.

3. Substrat pour végétation apte à être mis en tas selon la revendication 1 ou 2, caractérisé par 0,5 à 25 % en volume de constituants organiques lentement dégradables, difficilement putrescibles comme les fibres de coco, de sisal ou de jute ainsi que du gruau de ricin, de la paille de riz et des écorces de cacao.

4. Substrat pour végétation apte à être mis en tas selon la revendication 1 à 3, caractérisé par le rapport de mélange suivant des pourcentages de fibres : 1 à 50 % de fibres synthétiques imputresciles et 50 à 99 % de libres putrescibles lentement dégradables.

5. Substrat pour végétation apte à être mis en tas selon la revendication 1 à 4, caractérisé par des fibres de synthèse avec 5 à 300 dtex.

6. Substrat pour végétation apte à être mis en tas selon la revendication 1 à 5, caractérisé en ce que les parties organiques facilement dégradables sont 5 à 15 % en volume.

7. Procédé pour la fabrication du substrat de terre pour végétation apte à être mis en tas selon l'une ou plusieurs des revendications précédentes 1 à 6, caractérisé en ce que l'on coupe des ficelles ou des cordes tournées ou des structures de fibres correspondantes, pour lesquelles il peut s'agir aussi bien de matières neuves que bien sûr aussi de matières à recycler, en morceaux d'1 à 10 cm, que l'on détortille et/ou ouvre ensuite les morceaux de corde en fibres individuelles et qu'on les ajoute ensuite avec les constituants organiques lentement dégradables, difficilement putrescibles au substrat de terre pour végétation en fabriquant un mélange le plus homogène possible.

8. Utilisation d'un substrat de terre pour végétation apte à être mis en tas selon les revendications 1 à 6 conjointement avec un renforcement en fibres réticulé horizontalement et verticalement, comprenant des mélanges de 3,75 à 30 % en volume de fibres synthétiques imputrescibles, détachées, détortillées et/ou ouvertes comme fibres individuelles en matière neuve ou de recyclage, d'1 à 10 cm de longueur, et de 0,5 à 25 % en volume de constituants organiques lentement dégradables, difficilement putrescibles comme base porteuse pour la culture en particulier de surfaces ou de nattes de végétation et comme couche porteuse de végétation pour des plantations de toit.
